# EUROPÄISCHE PATENTSCHRIFT

(11) **EP 1 329 014 B1**
(45) Veröffentlichungstag und Bekanntmachung des Hinweises auf die Patenterteilung: **16.11.2005**
(21) Anmeldenummer: 01972041.6
(22) Anmeldetag: 10.09.2001
(51) Int. Cl.: H02K 5/128

(54) **ROTORBAUGRUPPE FÜR EINEN ELEKTROMOTOR UND INNENLÄUFER-ELEKTROMOTOR**
ROTOR UNIT FOR AN ELECTROMOTOR AND AN INTERNAL ROTOR ELECTROMOTOR
ENSEMBLE ROTOR DESTINE A UN MOTEUR ELECTRIQUE ET MOTEUR ELECTRIQUE A INDUIT

(30) Priorität: 17.10.2000 DE 10051403
(43) Veröffentlichungstag der Anmeldung: 23.07.2003
(73) Patentinhaber: MINEBEA Co., Ltd., Kitasaku-gun, Nagano-ken (JP)
(72) Erfinder: RAPP, Harald, 78664 Eschbronn (DE); KUWERT, Oswald, 79336 Tutschfelden (DE); OELSCH, Jürgen, 97618 Hohenroth (DE)
(74) Vertreter: Liesegang, Eva
(86) Internationale Anmeldenummer: PCT/EP2001/010457
(87) Internationale Veröffentlichungsnummer: WO 2002/033804

(56) Entgegenhaltungen:
- EP-A- 0 963 029
- DE-A- 3 818 532
- DE-A- 4 434 448
- DE-A- 19 907 555
- GB-A- 1 330 674
- US-A- 3 733 504
- US-A- 4 999 533

## Beschreibung

Die Erfindung betrifft, eine Rotorbaugruppe für einen Elektromotor gemäß dem Oberbegriff von Patentanspruchs 1. Ein derartiger Motor ist bekannt aus der US-A-3,733,504.

Die Erfindung betrifft das Gebiet der bürstenlosen Elektromotoren mit Permanentmagneten und insbesondere der Gleichstrommotoren, die als sogenannte Innenläufer-Elektromotoren konfiguriert sind. Innenläufermotoren weisen eine Rotorbaugruppe auf, die eine Rotorwelle und einen oder mehrere auf der Rotorwelle angeordnete Permanentmagnete umfaßt und in eine Statoreinheit eingeschoben ist, welche einen Statorkörper und Feldwicklungen aufweist.

Eine Bauweise eines solchen Motors ist in dem-US-Patent.Nr. 5,970,600 beschrieben. Der Motor weist ein Gehäuse auf, in dem der Stator, die Rotorbaugruppe sowie Lager zur drehbaren Lagerung der Rotorbaugruppe enthalten sind. Der Stator umfaßt Statorbleche und Wicklungen und grenzt einen Innenraum ein, in den die Motorbaugruppe eingeschoben werden kann. Bei der US-A-5,970,600 sind die Lager für die Rotorbaugruppe in Stirnkappen des --Motorgehäuses integriert, wodurch ein insgesamt kompakter Aufbau erhalten wird.

Ein Problem, das sich bei der Herstellung eines solchen Innenläufer-Elektromotors ergibt, ist, daß beim Einfügen der Rotorbangruppe in den Statorinnenraum ferromagnetische Partikel von den Rotormagneten abgetragen werden und in den Arbeitsluftspalt gelangen können, der im wesentlichen durch die Außenkontur der Rotormagneten und die Innenkontur des Stators definiert wird Es ist zwar möglich und üblich, die gesamte Motorbaugruppe nach der Montage durch Vorsehen eines Gehäuses, wie bei der US-A-5 970 600, gegen Eindringen von Fremdkörpern und Verschmutzungen zu schützen, während der Montage der verschiedenen Motorkomponenten ist jedoch das Innere des Motors und insbesondere der Arbeitsluflspalt gegen das Eindringen solcher Fremdkörper nicht geschützt.

Innenläufer-Elektromotoren gemäß dem Stand der Technik haben ferner den Nachteil einer relativ aufwendigen, weil überwiegend sequentiellen Montage, bei der nacheinander der Stator und mindestens ein Lager im Gehäuse vormontiert werden müssen und anschließend die Rotorbaugruppe in den Stator und in das Lager eingepaßt werden muß. In der Regel wird die notwendige Konzentrizität der Teile erst durch einen deckelartigen Flansch hergestellt, in dem sich dann auch das zweite Lager befindet, in dem die Rotorwelle drehbar gelagert ist. Dieser Montageschritt wird durch die, vom Rotormagneten ausgehenden und durch Wechselwirkung mit dem Statorblechpaket radial und axial gerichteten, Magnetkräfte und -momente erheblich erschwert, so daß eine berührungslose konzentrische Einpassung des Rotors gar nicht oder nur mit erheblichem vorrichtungstechnischem Aufwand möglich ist.

Aus dem deutschen Patent 32 37 196 ist ein Synchronkleinstmotor bekannt, der ein einteiliges topfartiges Gehäuse aufweist, welches als ferromagnetisch wirksamer Rückschluß die eisenlosen Feldwicklungen umgibt, und einen innerhalb der Feldwicklungen angeordneten Rotor aufweist, dessen Permanentmagnete auf einer Hülse aus magnetisch leitfähigem Material angeordnet sind. Der Rotor ist in einem die Lager enthaltenden hermetisch abgeschlossenen Gehäuse untergebracht, und die Drehmomentabgabe erfolgt über eine Dauermagnetkupplung, deren einer Teil durch die Permanentmagnete des Rotors gebildet wird und deren anderer Teil aus einer Permanentmagnetanordnung auf einer Welle außerhalb des Rotorgehäuses besteht. Durch die hermetische Verkapselung des Rotors wird sichergestellt, daß keine Fremdkörper in den Rotor eindringen können, die Lager werden dauergeschmiert und sind gegen Umwelteinflüsse geschützt. Der Zusammenbau des gesamten Motors erfolgt durch Einschieben des hermetisch verkapselten Rotors in den zylindrischen Hohlraum einer einseitig offenen topfförmigen Hülse aus Kunststoff, in die die eisenlosen Feldwicklungen eingebettet sind. Diese Hülse befindet sich in einem ebenfalls topfförmig ausgebildeten Gehäuse aus ferromagnetischem Material.

Die DE-PS 32 37 196 stellt gegenüber dem oben beschriebenen Stand der Technik bereits eine Verbesserung dar, weil der Zusammenbau des Motors vereinfacht ist, wobei, wegen der eisenlosen Feldwicklungen, die zudem noch vollständig in Kunststoff eingebettet sind, das Abscheren von ferromagnetischen Partikeln von der Rotorbaugruppe bei der Montage von vornherein ausgeschlossen ist.

Die Anordnung der DE-PS 32 37 196 hat den Nachteil, daß Motoren mit eisenlosen Feldwicklungen infolge des großen Luftspaltes prinzipiell nur mit einem sehr niedrigen Wirkungsgrad arbeiten, weshalb sie überwiegend als Mikromotoren für hohe Drehzahlen, vorzugsweise im Dentalbereich, Verwendung finden. Für die Abgabe größerer Drehmomente, wie beispielsweise für KFZ-Anwendungen gefordert, sind sie jedoch gänzlich ungeeignet

Der Innenläufermotor der DE-PS 32 37 196 hat weiterhin den Nachteil, daß durch die hermetische Verkapselung der Rotorbaugruppe keine direkte, mechanische Ankopplung einer Last möglich ist, sondern daß die Drehmomentübertragung vom Rotor auf eine Welle nur indirekt, z.B. mittels magnetischer Kopplung, erfolgen muß, wie in der Patentschrift beschrieben.

Im Stand der Technik ist es im Bereich der Pumpenmotoren grundsätzlich bekannt, ein Spaltrohr oder einen Spalttopf zum Trennen von Stator und Rotor vorzusehen, um den Ständer und die Pumpenelektronik von der fördermediumführenden Seite des Pumpenmotors zu isolieren. Solche Spaltrohrmotoren sind beispielsweise beschrieben in DE 38 18 582, EP 0 963 029, DE 199 07 555 und DE 44 34 448. Die genannten Druckschriften betreffen sämtlich Synchronmaschinen oder Asynchronmaschinen, wobei ein wesentliches Merkmal eines Spaltrohrmotors ein einseitig vollständig geschlossener Spalttopf ist.

Das U.S. Patent 4,999,533 beschreibt einen Elektromotor mit einer eingeschlossenen Rotoreinheit zur Verwendung beispielsweise in einem Gebläse. Der Rotor ist von einer Hülse umschlossen, welche Rippen aufweisen, die mit dem Stator in Eingriff kommen, um den Stator relativ zu dem Rotor in einem rahmenlosen Motor zu halten.

Die GB-A-1 330 674 beschreibt ebenfalls einen Rotor mit einer Rotorbaugruppe, die in einer Hülse untergebracht ist, wobei die Hülse an ihrer Außenseite in Längsrichtung verlaufende Versteifungsrippen aufweist.

In dem nicht vorveröffentlichen Dokument DE 100 34 302.3 derselben Amnelderin ist eine Rotorbaugruppe für einen Elektromotor beschrieben, mit einer Rotorwelle und wenigstens einem Permanentmagneten, der auf der Rotorwelle angeordnet ist, wobei die Rotorwelle mit dem Permanentmagneten darauf in einer Hülse untergebracht ist und die Rotorwelle in der Hülse frei drehbar ist.

Die Rotorbaugruppe kann in der Hülse vormontiert werden. Die Rotorbaugruppe ist vorzugsweise so gestaltet, daß die Rotorwelle an einem Ende der Hülse aus der Hülse herausgeführt ist, wobei die Abdichtung zwischen dem Hülsenkörper und der Rotorwelle über Lager in den Stirnenden der Hülse erfolgt, welche die Rotorwelle drehbar lagern a durch ergibt sich zwar keine hermetische Abdichtung der Rotorbaugruppe, jedoch ist die Hülse durch die Lager, die zudem mit Dichtungen gegen Eindringen von Verunreinigungen geschützt sind, in ihren Stirnenden ausreichend geschützt, um das Eindringen von Feststoffpartikeln zu verhindern.

Der Rotor wird insgesamt als vormontierte Baugruppe ins Innere des Stators eingeschoben, so daß keine Probleme mit dem Abscheren von ferromagnetischen Partikeln entstehen können.

Die in die Kunststoffhülse eingeschlossene Rotorbaügruppe zentriert sich beim Einschieben in den Stator durch die Magnetkräfte zwischen Rotorbaugruppe und Stator in axialer Richtung selbst, so daß keine weiteren Vorkehrungen getroffen werden müssen, wie das Vorsehen und Justieren von Anschlägen, um den Rotor im Stator richtig zu positionieren. Es muß lediglich darauf geachtet werden, daß die Rotorbaugruppe in dem Stator axial ausreichend frei beweglich ist, damit sie nicht durch einen Anschlag, ein geschlossenes Ende des Stators oder dergleichen daran gehindert wird, sich im Stator magnetisch zu zentrieren.
Bei einer solchen Rotorbaugruppe ergibt sich zwar eine deutliche Verbesserung gegenüber dem Stand der Technik, und es wird die Aufgabe gelöst, einen Innenläufer-Elektromotor vorzusehen, der mit geringem Aufwand montierbar ist, und bei dem sichergestellt ist, daß während der Montage und beim Betrieb keine Verunreinigungen in das Innere des Motors und insbesondere in den Arbeitsluftspalt gelangen. Es sind jedoch zusätzliche Bauteile und insbesondere die "verlorene" Hülse notwendig.
Der Erfindung liegt daher die Aufgabe zugrunde, ausgehend von dem Stand der Technik nach US 3,733,504 eine Rotorbaugruppe und einen Innenläufer-Elektromotor vorzusehen, die einfach zusammenzubauen sind und mit eine möglichst geringen Anzahl von Bauteilen auskommen.

Diese Aufgabe wird durch eine Rotorbaugruppe mit den Merkmalen von Anspruch 1 sowie durch einen Innenläufer-Gleichstrommotor, der eine solche Rotorbaugruppe umfaßt, gelöst. Die Erfindung hat den Vorteil, daß wenig Bauteile benötigt werden und der Zusammenbau des gesamten Elektromotors vereinfacht wird, weil ein Motorflansch, der für die Montage des Elektromotors oder für die Anbringung eines Motorgehäuses an diesem benötigt wird, einen Deckelabschnitt zum Verschließen der Hülse aufweist und so eine Doppelfunktion erfüllt. Der Deckelabschnitt ist mit einem Gehäuseabschnitt direkt verbunden, so daß die Montage des Motors wieter vereinfacht wird.

Die Hülse weist optional eine Versteifungsstruktur an ihrer Außenseite auf.

Der Flansch ist ausgebildet, daß er Lager zur Lagerung der Rotor Drelle bei dem ersten Stirnende der Hülse enthält, wobei ein Lagersitz für ein zweites Lager zur Lagerung der Rotor rung der Rotorwelle an einem zweiten, dem ersten gegenüberliegenden Stirnende der Hülse in die Hülse integriert ist.

Besonders zweckmäßig ist die Rotorwelle an dem ersten Stirnende der Hülse bei dem Flansch aus der Hülse heraus geführt, wobei das zweite, dem ersten gegenüberliegende Stirnende der Hülse geschlossen oder weitgehend geschlossen ist.

Bei einer bevorzugten Ausführungsform weist die Hülse einen im wesentlichen zylindrischen Kapselabschnitt auf, und der Flansch ist an die Hülse angeformt oder kann als separates Bauteil mit ihr in Eingriff sein.

Der Flansch ist in einer ersten Variante so ausgebildet, daß er einen Deckelabschnitt zum Verschließen der Hülse an dem ersten Stirnende und zum Aufnehmen eines Lagers für die Rotorwelle und einen radial nach außen abstehenden Flanschabschnitt zum Montieren des Elektromotors aufweist. In einer zweiten Variante umfaßt der Flansch einen ähnlichen Deckelabschnitt und einen mit dem Deckelabschnitt verbundenen Gehäuseabschnitt, der den Elektromotor umschließt. Die erste und die zweite Variante können auch kombiniert zum Einsatz kommen.

In einer aus Fertigungsgesichtspunkten besonders günstigen Ausführungsform ist der Gehäuseabschnitt aus einem tiefgezogenen Blechteil hergestellt. Dieses wird in eine Spritzgußmaschine eingelegt und partiell mit Kunststoff umspritzt, welcher den Deckelabschnitt bildet und die Verbindung zum Gehäuseabschnitt herstellt.

Die Erfindung sieht auch einen Innenläufer-Elektromotor mit einer Rotorbaugruppe der oben beschriebenen Bauart und einem Stator vor, wobei der Stator über die Hülse der Rotorbaugruppe bzw. zwischen die Hülse und den Gehäuseabschnitt der Rotorbaugruppe geschoben ist.

Dieser Elektromotor kann zusätzlich teilweise oder vollständig vergossen sein.

Die Erfindung sieht somit eine Rotorbaugruppe für einen Elektromotor und einen Innenläufer-Elektromötor vor, wobei der Rotor zusammen mit den Lagern in einer Kombination aus der Hülse und dem die Hülse abschließenden Flansch vormontiert ist und diese Rotorbaugruppe in den Stator eingeschoben wird. Der Flansch verschließt einerseits die Rotorbaugruppe und schützt sie gegen Eindringen von Fremdkörpern, und er dient andererseits zur Montage des fertigen Elektromotors und/oder zur Anbringung eines Motorgehäuses an diesem. Die Rotorwelle ist bei dem Flansch aus der Hülse herausgeführt, wobei der Flansch zusammen mit dem Lager und dessen Dichtung einen ausreichenden Schutz der Rotorbaugruppe gewährleistet. Durch die erfindungsgemäße Bauweise wird ein sehr kompakter geschützter Elektromotor geschaffen, der mit einem Minimum an Bauteilen und Montageschritten, z. B. in einem Reinraum vormontiert und dann insgesamt in den Stator eingeschoben werden kann. Durch das Vorsehen der Hülse kann verhindert werden, daß beim Einbringen der Rotorbaugruppe in den Stator ferromagnetisches Material abgeschert wird und in den Arbeitsluftspalt dringt. Auch das Eindringen anderer Fremdkörper wird durch die gekapselte Rotorbaugruppe verhindert. Ferner führt die Verkapselung der Rotorbaugruppe mit einer - vorzugsweise aus Kunststoff hergestellten - Hülse dazu, daß sich der Rotor beim Einschieben in den Stator in axialer Richtung selbst zentriert und daß kein Körperschall vom Rotor auf den Stator oder gegebenenfalls ein Motorgehäuse übertragen wird.

Der erfindungsgemäße Motor wird beispielsweise als Gleichstrommotor vorzugsweise in Kraftfahrzeuganwendungen, z. B. als Lenkhilfe oder für den Antrieb von Hydrauliksystemen, welche einen hydraulischen Druck nur dann aufbauen, wenn er im Kraftfahrzeug tatsächlich benötigt wird, für elektromotorisch betätigte Bremssysteme, sogenannte Break-by-wire-Systeme, eingesetzt.

Die Erfindung ist im folgenden anhand bevorzugter Ausführungsformen mit Bezug auf die Zeichnungen näher erläutert. In den Figuren zeigen:
- Fig. 1: eine Schnittdarstellung durch einen Innenläufer-Elektromotor gemäß einer nicht zur Erfindung gehö renden ersten Ausführungsform;
- Fig. 2: eine Schnittdarstellung durch einen Innenläufer-Elektromotor gemäß einer zweiten Ausführungsform der Erfindung;
- Fig. 3: eine Schnittdarstellung durch einen innenläufer-Elektromotor gemäß einer dritten Ausführungsform der Erfindung; und
- Fig. 4: eine Schnittdarstellung durch einen Innehläufer-Elektromotor gemäß einer vierten Ausführungsform der Erfindung;

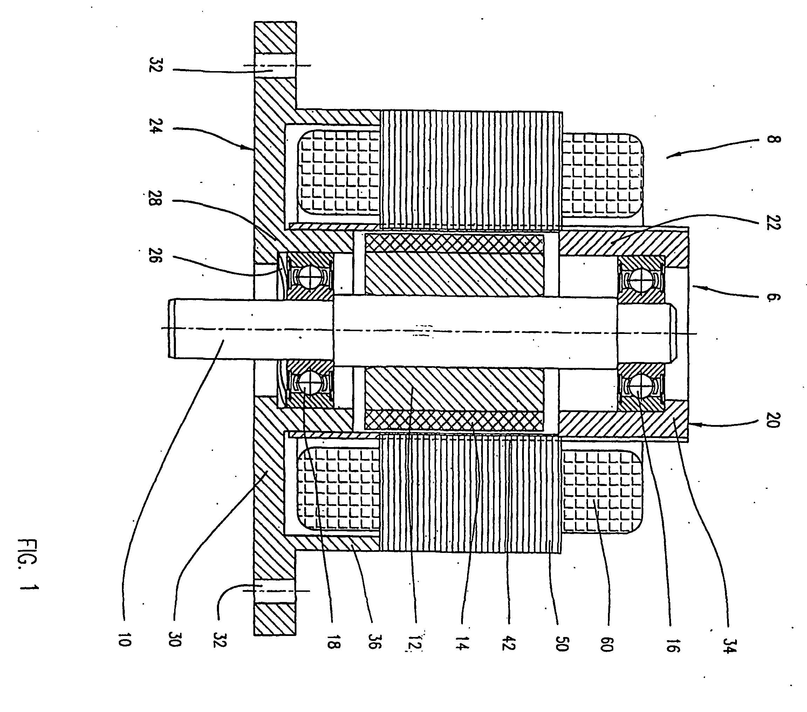

Fig. 1 zeigt eine erste Ausführungsform eines Elektromotors, insbesondere eines Innenläufer-Gleichstrommotors in Schnittdarstellung. Der Motor umfaßt eine Rotorbaugruppe 6 und einen Stator 8. Die Rotorbaugruppe weist eine Rotorwelle 10 auf, die einen Rückschlußring 12 aus einem weich magnetischen Material, wie Eisen, trägt. Auf dem Rückschlußring 12 ist ein segmentierter oder ringförmiger Permanentmagnet 14 angebracht. Die Welle 10 ist in Lagern 16, 18 drehbar gelagert, wobei die Lager 16, 18 als Wälz- oder Gleitlager und insbesondere als Kugellager ausgebildet sein können. Der Rotor, der hier durch die Rotorwelle 10, den Rückschlußring 12 und den/die Permanentmagnete 14 gebildet wird, ist in einer Hülse 20 eingeschlossen, die einen Becherabschnitt 22 und einen Flansch 24 umfaßt. Der Flansch ist in der in Fig. 1 gezeigten Ausführungsform einstückig aus einem mittleren Deckelabschnitt 28 und einem Flanschabschnitt 30 aufgebaut. Der Flanschabschnitt 30 weist, auf den Umfang des Motors verteilt, Bohrungen 32 auf. Der Becherabschnitt 22 der Hülse 20 ist bei der gezeigten Ausführungsform über den Deckelabschnitt 28 des Flansches 24 geschoben, um die beiden Teile passgenau miteinander zu verbinden.

Die Lager 16, 18 können auf der Rotorwelle 10 vormontiert werden und kommen in einem Stirnende 34 des Becherabschnitts 22 der Hülse 20 sowie in dem Deckelabschnitt 28 des Flansches 24 zu liegen und sind in diese eingepreßt und/oder geklebt oder auf andere geeignete Weise gehalten. Bei der dargestellten Ausführungsform ist in dem Deckelabschnitt 28 des Flansches 24 angrenzend an das Lager 18 zum Ausgleich der axialen Summentoleranzen ein ringförmiges Federelement, z.B. ein Wellfederring 26 vorgesehen, über den die beiden Lager 16, 18 spielfrei gegeneinander verspannt werden können.

Die Rotorbaugruppe ist in Fig. 1 mit ihren Grundelementen dargestellt, wobei die spezielle Dimensionierung und genaue Anordnung der Elemente variieren kann. Insbesondere sind in Fig. 1 Kugellager 16, 18 vorgesehen, wobei der Rotor aber auch auf jede andere geeignete Weise drehbar gelagert sein kann, beispielsweise durch Gleitlager, hydraulische Lager, Luftlager etc. Auch kann die Rotorbaugruppe noch andere als die dargestellten Elemente aufweisen. Zwischen dem Außenumfang des/der Permanentmagneten 14 und der Innenseite der Hülse 20 ist ein möglichst kleiner Luftspalt vorgesehen, der die Relativbewegung zwischen der feststehenden Hülse und dem drehenden Rotor zuläßt. Je nach Anforderungen an die Rotorbaugruppe und den Elektromotor werden sich dem Fachmann noch viele andere Abwandlungen von der gezeigten Ausführungsform erschließen.

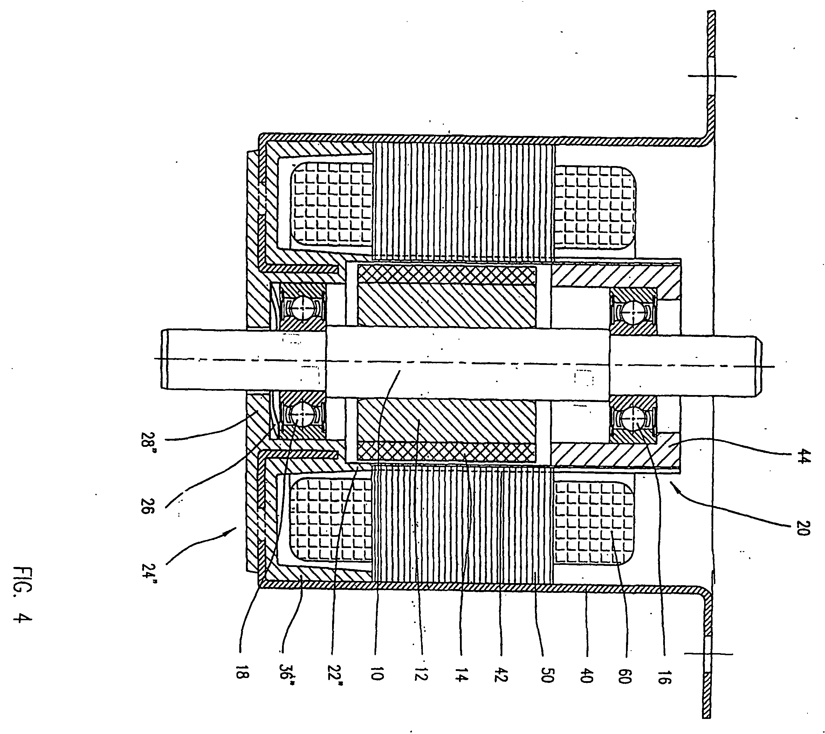

Der Becherabschnitt 22 der Hülse 20 ist vorzugsweise aus Kunststoff durch Spritzgießen hergestellt. Abweichend von der gezeigten Ausführungsform kann der Becherabschnitt 22 an dem dem Flansch 24 gegenüberliegenden Stirnende 34 einen separaten Deckel aufweisen, der aus Kunststoff oder Metall bestehen kann. Dies ist z.B. in der unten beschriebenen Ausführungsform der Fig. 4 gezeigt. Ein besonders geeigneter Kunststoff ist LCP (liquid crystal polymer). Andere Materialien sind Polyacetal, Polyoxymethylen (POM), Polysulfon (PSU), Polycarbonat (PC), Polyphenylensulfid (PPS), Polyamidimid (PAi), Polyetheretherketon (PEEK), Polyethersulfon (PES), Polyetherimid (PEi). Der einstückige Flansch 24 der gezeigten Ausführungsform ist aus Metall hergestellt.

Der in Fig. 1 dargestellte Becherabschnitt 22 weist eine relativ dünne Innenwand auf, auf deren Außenseite Längsrippen zur Versteifung der Hülsenwand ausgebildet sind. Die Versteifungsstruktur entspricht der in der DE 100 34 302.3 beschriebenen Erfindung, auf die Bezug genommen wird. Die Längsrippen erstrecken sich im wesentlichen über die gesamte Länge der zylindrischen Hülse 20 und sind parallel zu deren Längsachse ausgerichtet, wobei die Anzahl und Ausgestaltung der Rippen an die Innenkontur des Stators angepaßt wird.

Die in Fig. 1 gezeigte Rotorbaugruppe 6 ist in das Innere des Stators 8 eingeschoben. Der Stator 8 ist in Fig. 1 schematisch durch ein aus einzelnen Statorblechen 50 aufgebautes Blechpaket und eine Wicklung 60 dargestellt. Eine gestrichelte Linie 42 deutet den Eingriff der Längsrippen in die zwischen den Statorpolen ausgebildeten Pollücken an.

Der Metallflansch 24 ist bei der gezeigten Ausführungsform so ausgebildet, daß sich der Dekkelabschnitt 28 in den Becherabschnitt 22 der Hülse hinein erstreckt und mit diesem verklebt werden kann, um die Hülse 20 zu verschließen. Von dem Deckelabschnitt 28 erstreckt sich radial nach außen der Flanschabschnitt 24 zur Befestigung des zusammengebauten Motors vor Ort z.B. an einem KFZ-Chassis oder ähnlichem, wobei der Flanschabschnitt 24 einen Wandabschnitt 36 trägt, der im zusammengebauten Zustand des Motors den Stator 8 teilweise umgibt. Abweichend von der in Figur 1 gezeigten Ausführungsform könnte sich der von dem Flansch 24 abstehende Wandabschnitt 36 auch über die gesamte oder über im wesentlichen die gesamte Länge des Stators 8 erstrecken und somit einen Gehäusekörper für den zusammengebauten Elektromotor bilden.

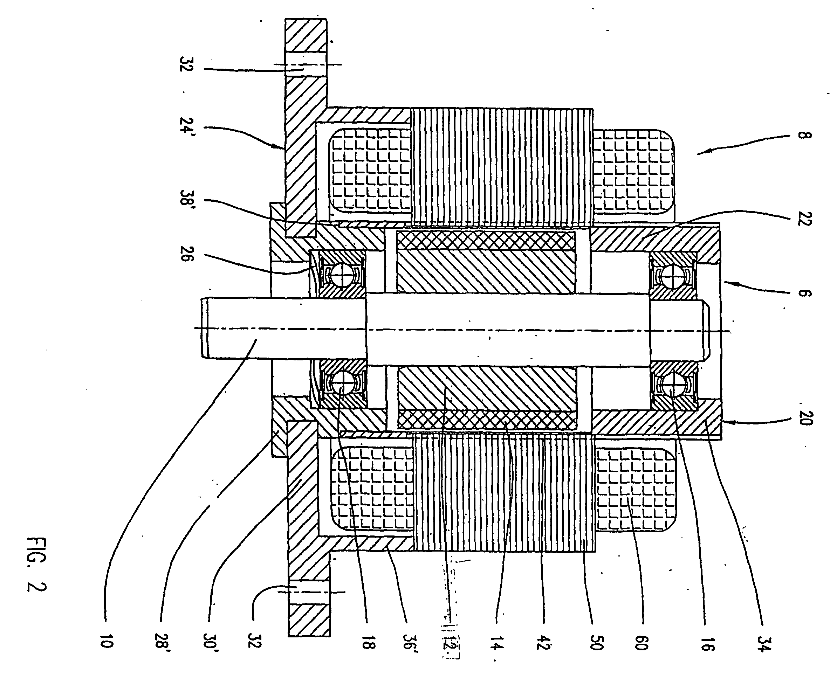

Figur 2 zeigt eine Ausführungsform des erfindungsgemäßen Innenläufer-Elektromotors, die sich in der Ausbildung des Flansches von Figur 1 unterscheidet. Gleiche oder ähnliche Teile wie in Figur 1 sind mit denselben Bezugszeichen bezeichnet und nicht nochmals beschrieben.

Der Flansch 24' dieser zweiten Ausführungsform unterscheidet sich von dem Flansch 24 der ersten Ausführungsform darin, daß er aus zwei Teilen hergestellt ist. Bei dem Flansch 24' sind ein Deckelabschnitt 28' und ein Flanschabschnitt 30' aus unterschiedlichen Materialien getrennt voneinander hergestellt, wobei der Deckelabschnitt 28' vorzugsweise aus Kunststoff und der Flanschabschnitt 30' vorzugsweise aus Metall hergestellt ist. Insbesondere ist der Deckelabschnitt 28' aus Kunststoff in den Flanschabschnitt 30' eingespritzt und enthält eine Aufnahme für das Lager 18, wobei der Deckelabschnitt 28' auch eine Schulter 38' aufweist, gegen welche der Becherabschnitt 22 der Hülse 20 zu liegen kommt, wenn die Hülse 20 über den Deckelabschnitt 28' des Flansches 24' geschoben wird.

Die in Figur 2 gezeigte Ausfahrungsform hat den Vorteil, daß beide Lager 16 und 18 in Kunststoffteilen, nämlich in der Hülse 20 und dem Deckelabschnitt 28" aufgenommen sind, die im Verhältnis zu dem Flanschabschnitt 30' zur Befestigung des Motors an einem Chassis oder dergleichen getrennte Bauteile darstellen, so daß die Übertragung von Körperschall auf das Chassis drastisch reduziert werden kann.

Obwohl die Ausführungsform der Figur 2 auf den ersten Blick aufwendiger erscheint, hat sie bei der Herstellung den Vorteil, daß der Deckelabschnitt 28' durch Spritzgießen einfacher geformt werden kann, als der einstückig ausgebildete Metallflansch 24 der Figur 1.

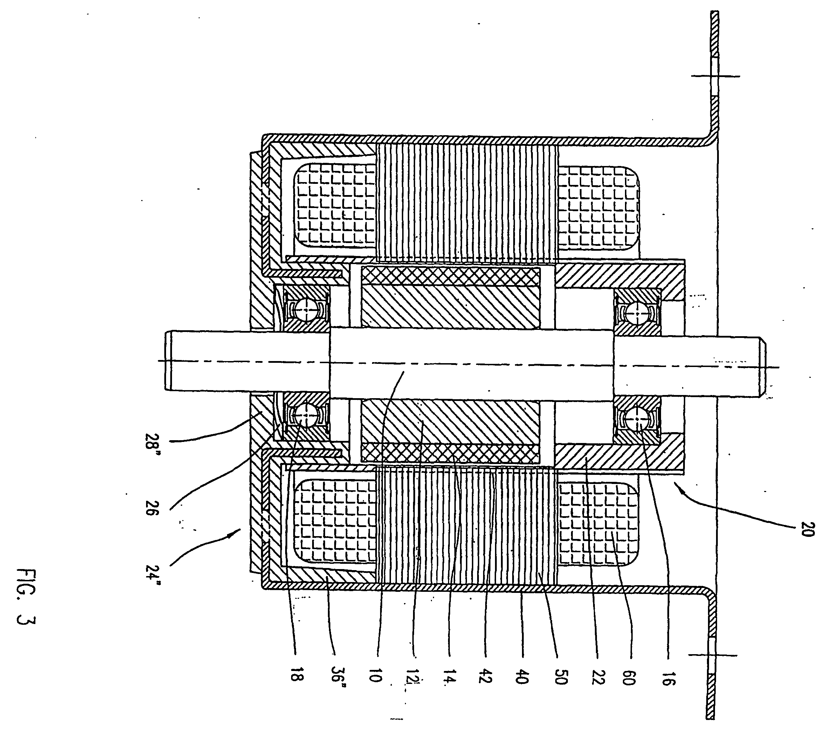

Weitere Ausführungsformen der Erfindung sind in den Figuren 3 und 4 dargestellt. Auch in den Figuren 3 und 4 sind die gleichen oder ähnliche Teile wie in den vorhergehenden Figuren mit denselben Bezugszeichen bezeichnet und nicht nochmals beschrieben.

Die Figuren 3 und 4 unterscheiden sich von den vorhergehenden Ausführungsformen darin, daß der Flansch 24" einen Deckelabschnitt 28" aus Kunststoff und einen mit diesem verbundenen Gehäusemantel 40 aufweist. Der Gehäusemantel 40 besteht vorzugsweise aus einem tiefgezogenen Blechteil, das von dem Kunststoff des Deckelabschnitts 28" umspritzt und gehalten ist. Dieser topfförmige Gehäusemantel 40 umgibt den gesamten Elektromotor, nachdem der Stator 8 und die Rotorbaugruppe 6 zusammengefügt sind.

Die Ausführungsformen der Figuren 3 und 4 unterscheiden sich in der Ausbildung des Becherabschnitts 22 der Hülse. Figur 3 zeigt den Becherabschnitt 22 der Hülse 20 als ein von dem Deckelabschnitt 28" des Flansches 24" getrenntes Bauteil, wie bei den beiden vorhergehenden Ausführungsformen, und Figur 4 zeigt die Ausbildung des Becherabschnitts 22" der Hülse 20 einteilig mit dem Deckelabschnitt 28" des Flansches 24". Bei der Ausführungsform der Figur 4 weist die Hülse 20 an ihrem dem Flansch 24" gegenüberliegenden Stirnende einen getrennten Deckelabschnitt 44 auf, der abgenommen werden kann, um den Rotor in die Hülse 20 einfügen zu können.

Bei den beiden in den Figuren 3 und 4 gezeigten Ausführungen wird der Gehäusemantel 40 in eine Spritzgußmaschine eingelegt und partiell mit Kunststoff umspritzt, welcher den Dekkelabschnitt 28" des Flansches 24" bildet und die Verbindung zum Gehäusemantel 40 herstellt. Zur Stabilisierung des Gehäusemantels 40 und als Anschlag für den Stator ist auf dem Flansch 24" ein Wandabschnitt 36" vorgesehen.

Zusätzlich kann der Flansch 24" bei diesen Ausführungsformen, ähnlich wie in den Figuren 1 und 2, so ausgebildet sein, daß er auch zur Befestigung des zusammengebauten Elektromotors an einem Chassis oder dergleichen verwendet werden kann, wobei dies in den Figuren nicht gezeigt ist.

Für alle Ausführungsvarianten gilt, daß der erfindungsgemäße Innenläufer-Elektromotor auf einfache Weise hergestellt werden kann, indem zunächst die Rotorbaugruppe, vorzugsweise in einem Reinraum, vormontiert wird. Hierzu werden der Eisenrückschlußring 12 und der/die Permanentmagnete 14 auf die Rotorwelle 16 aufgebracht und die Lager 16, 18 auf der Rotorwelle 10 vormontiert. Die Hülse 20 und der Flansch 24 werden von gegenüberliegenden Enden der Welle 10 über den Rotor geschoben und miteinander verbunden und vorzugsweise zusätzlich verklebt. Die Rotorlager 16, 18 sitzen dann fest in dem Stirnende 32 der Hülse 22 und in dem Deckelabschnitt 28 des Flansches 24 und werden durch den Wellfederring 26 verspannt.

Bevor die vollständig vormontierte Baugruppe in das Innere des Stators 8 - in dem sie axial frei beweglich ist - eingeschoben und durch "selbstzentrierende Magnetkräfte" in die magnetische Mitte ausgerichtet wird, kann zur dauerhaften Verbindung mit dem Stator auf der Außenseite der Hülse 20 ein vorzugsweise flüssiger Kunststoff aufgebracht werden.

Bei der gezeigten Ausführungsform ist der Statorring 8 an seinen beiden Enden offen, so daß die axiale Bewegung der Rotorbaugruppe 6 nicht behindert wird. Andere Bauformen des Stators sind für den Fachmann erkennbar, wobei die Erfindung den großen Vorteil bietet, daß auf Anschläge oder andere Mittel zum Zentrieren des Rotors 6 im Stator 8 verzichtet werden kann.

Nach dem Einschieben der Rotorbaugruppe 6 in den Stator 8 füllt der Klebstoff die noch vorhandenen Zwischenräume zumindest teilweise aus und gewährleistet nach dem Aushärten einen festen, unverschieblichen Sitz des Rotors 6 im Stator 8.

Durch die vollständige Verkapselung des Rotors 6 und das Einschließen aller beweglichen, rotierenden Teile in einer (relativ zu dem Stator 8 und dem Motorgehäuse) feststehenden Hülse wird die Übertragung von Körperschall und dadurch die Schallemission des gesamten Motors drastisch reduziert.

Der dergestalt aufgebaute Innenläufermotor kann jetzt - ohne daß die Funktion in irgendeiner Weise beeinträchtigt wird - insgesamt umspritzt oder vergossen sowie über den Flansch 24 in der ihm zugeordneten Baugruppe in der vorbestimmten Position, an einer ihm zugeordneten Baugruppe montiert werden.

Eine besondere Anpassung des Stators 8 an die erfindungsgemäße Rotorbaugruppe ist nicht notwendig. Die Verbindungen zwischen den einzelnen Komponenten, wie Welle 10, Rückschlußring 12 und Permanentmagnet 14 oder Hülse 20 und Flansch 24, Lager 16, 18 oder Stator 8 können durch Verpressen, Kleben, Schweißen, Rasten oder andere geeignete Weise erfolgen. Zahlreiche weitere Abwandlungen und Modifikationen der Erfindung werden sich dem Fachmann ergeben.

## Patentansprüche

1. Rotorbaugruppe für einen Elektromotor mit einer Rotorwelle (10) und wenigstens einem Permanentmagneten (14), der auf der Rotorwelle angeordnet ist, wobei die Rotorwelle (10) mit dem Permanentmagneten (14) darauf in einer Hülse (20) untergebracht ist und die Rotorwelle (10) in der Hülse (20) frei drehbar ist, und wobei die Hülse an einem ersten Stirnende mit einem Flansch (24) verbunden ist, ein Lagersitz für ein erstes Lager (18) der Rotorwelle (10) bei dem ersten Stirnende der Hülse (20) in den Flansch integriert ist und ein Lagersitz für ein zweites Lager (16) der Welle (10) bei einem zweiten Stirnende der Hülse (20) in die Hülse integriert ist, wobei die Hülse (20) beidseitig offen gestaltet ist und die Stirnenden der Hülse (20) durch den Flansch (24) und die Lager (16, 18) verschlossen sind, wobei der Flansch (24) einen Deckelabschnitt (28) zum Verschließen der Hülse (20) an dem ersten Stirnende und zum Aufnehmen eines Lagers (18) für die Rotorwelle und einen radial nach außen abstehenden Flanschabschnitt (30) zum Montieren des Elektromotors aufweist, **dadurch gekennzeichnet, daß** der Deckelabschnitt (28) aus Kunststoff hergestellt ist und der Flanschabschnitt (30) aus Kunststoff oder Metall hergestellt und mit dem Deckelabschnitt (28) verbunden ist.

2. Rotorbaugruppe nach Anspruch 1, **dadurch gekennzeichnet, daß** die Hülse (20) eine Versteifungsstruktur (34) an ihrer Außenseite aufweist.

3. Rotorbaugruppe nach einem der vorangehenden Ansprüche, **dadurch gekennzeichnet, daß** die Hülse (20) an den Flansch (24) angeformt ist.

4. Rotorbaugruppe nach einem der vorangehenden Ansprüche, **dadurch gekennzeichnet, daß** die Hülse (20) einen im wesentlichen zylindrischen Becherabschnitt (22) aufweist, der mit dem Flansch (24) in Eingriff bringbar ist.

5. Rotorbaugruppe nach einem der vorangehenden Ansprüche, **dadurch gekennzeichnet, daß** der Flansch (24) einen mit dem Deckelabschnitt (28) verbundenen Gehäuseabschnitt (40) zum Umschließen des Elektromotors aufweist.

6. Rotorbaugruppe nach Anspruch 5, **dadurch gekennzeichnet, daß** der Deckelabschnitt (28) aus Kunststoff hergestellt und der Gehäuseabschnitt (40) aus Metall hergestellt und in den Deckelabschnitt (28) eingeformt ist.

7. Rotorbaugruppe nach Anspruch 6, **dadurch gekennzeichnet, daß** der Gehäuseabschnitt (40) aus einem tiefgezogenen Blechteil hergestellt ist und von dem Kunststoff-Deckelabschnitt (28) umspritzt ist, um den Deckelabschnitt (28) und den Gehäuseabschnitt (40) zu verbinden.

8. Innenläufer-Gleichstrommotor mit einer Rotorbaugruppe nach einem der vorangehenden Ansprüche und einem Stator (8), **dadurch gekennzeichnet, daß** der Stator (8) über die Hülse (20) der Rotorbaugruppe geschoben ist, wobei auf der Außenseite der Hülse (20) eine Versteifungsstruktur (34) in Form von Längsrippen ausgebildet ist und die Außenkontur der Versteifungsstruktur (34) an der Außenseite der Hülse (20) an die Innenkontur des Stators (8) angepaßt ist.

9. Innenläufer-Gleichstrommotor nach Anspruch 8, **dadurch gekennzeichnet, daß** er vergossen ist.

## Claims

1. Rotor assembly for an electric motor, comprising a rotor shaft (10) and at least one permanent magnet (14) mounted on the rotor shaft, wherein the rotor shaft (10) with the permanent magnet (14) mounted thereon is accommodated in a sleeve (20) and the rotor shaft (10) is free for rotation within the sleeve (20), and wherein the sleeve at a first end face thereof is connected to a flange (24), a bearing seat for a first bearing (18) supporting said rotor shaft (10) is integrated into said flange at a first end face of said sleeve (20) and a bearing seat for a second bearing (16) supporting said shaft (10) is integrated into said sleeve at a second end face of said sleeve (20), said sleeve (20) being open at both ends and the end faces of the sleeve (20) being closed by the flange (24) and the bearing (16, 18), wherein the flange (24) comprises a lid portion for closing the sleeve (20) at the first end face and for receiving a bearing (18) supporting said rotor shaft and a flange portion (30) extending radially outward for mounting the electric motor, **characterized in that** said lid portion (28) is made from plastic and said flange portion (30) is made from plastic or metal and is connected to the cup portion (28).

2. Rotor assembly according to claim 1, **characterized in that** said sleeve (20) comprises a stiffening structure (34) on its outside.

3. Rotor assembly according to one of the preceding claims, **characterized in** said the sleeve (20) is molded onto said flange (24).

4. Rotor assembly according to one of the preceding claims, **characterized in that** said sleeve (20) comprises an essentially cylindrical cup portion (22) engable with said flange (24).

5. Rotor assembly according to one of the preceding claims, **characterized in that** said flange (24) comprises a housing portion (40) connected to said lid portion (28) for enclosing said electric motor.

6. Rotor assembly according to claim 5, **characterized in that** said lid portion (28) is made from plastic and said housing portion (40) is made from metal and is molded into said lid portion (28).

7. Rotor assembly according to claim 6, **characterized in that** said housing portion (40) is made of a deep drawn metal sheet and is injection-coated by said plastic lid portion (28) for connecting said lid portion (28) with said housing portion (40).

8. An inner-rotor d.c. motor comprising a rotor assembly according to one of the preceding claims and a stator (8), **characterized in** said that stator (8) brought over said sleeve (20) of said rotor assembly, wherein at the outside of said sleeve (20) a stiffening structure (34) in the form of longitudinal rips is formed and wherein the outer contour of the stiffening structure (34) at the outside of the sleeve (20) matches the inner contour of the stator (8).

9. Inner-rotor d.c. motor according to claim 8, **characterized in** said the motor is resin embedded.

## Revendications

1. Ensemble rotor pour un moteur électrique, comportant un arbre de rotor (10) et au moins un aimant permanent (14), qui est disposé sur l'arbre de rotor, l'arbre de rotor (10) étant logé dessus avec l'aimant permanent (14) dans une douille (20) et l'arbre de rotor (10) pouvant pivoter librement dans la douille (20), et la douille étant assemblée avec une bride (24) au niveau d'une première extrémité frontale, une portée de roulement pour un premier palier (18) de l'arbre de rotor (10) étant intégrée dans la bride au niveau de la première extrémité frontale de la douille (20) et une portée de roulement pour un second palier (16) de l'arbre (10) étant intégrée dans la douille au niveau d'une seconde extrémité frontale de la douille (20), la douille (20) étant conçue ouverte des deux côtés et les extrémités frontales de la douille (20) étant fermées par la bride (24) et les paliers (16, 18), la bride (24) présentant une section d'obturation (28) destinée à fermer la douille (20) au niveau de la première extrémité frontale et destinée au logement d'un palier (18) pour l'arbre de rotor et une section de bride (30) en saillie radiale vers l'extérieur destinée au montage du moteur électrique, **caractérisé en ce que** la section d'obturation (28) est fabriquée en plastique et la section de bride (30) est fabriquée en plastique ou en métal et est assemblée avec la section d'obturation (28).

2. Ensemble rotor selon la revendication 1, **caractérisé en ce que** la douille (20) présente une structure de renforcement (34) au niveau de sa face extérieure.

3. Ensemble rotor selon l'une quelconque des revendications précédentes, **caractérisé en ce que** la douille (20) est formée sur la bride (24).

4. Ensemble rotor selon l'une quelconque des revendications précédentes, **caractérisé en ce que** la douille (20) présente une section à godet (22) pour l'essentiel cylindrique, qui peut être engrenée avec la bride (24).

5. Ensemble rotor selon l'une quelconque des revendications précédentes, **caractérisé en ce que** la bride (24) présente une section de carter (40) assemblée avec la section d'obturation (28) destinée à renfermer le moteur électrique.

6. Ensemble rotor selon la revendication 5, **caractérisé en ce que** la section d'obturation (28) est fabriquée en plastique et la section de carter (40) est fabriquée en métal et est moulée dans la section d'obturation (28).

7. Ensemble rotor selon la revendication 6, **caractérisé en ce que** la section de carter (40) est fabriquée à partir d'un embouti en tôle et est enrobée par la section d'obturation en plastique (28) afin d'assembler la section d'obturation (28) et la section de carter (40).

8. Moteur à courant continu à induit interne comportant un ensemble rotor selon l'une quelconque des revendications précédentes et un stator (8), **caractérisé en ce que** le stator (8) est poussé sur la douille (20) de l'ensemble rotor, une structure de renforcement (34) étant réalisée sur la face extérieure de la douille (20) sous la forme de nervures longitudinales et le contour extérieur de la structure de renforcement (34) au niveau de la face extérieure de la douille (20) étant adaptée au contour intérieur du stator (8).

9. Moteur à courant continu à induit interne selon la revendication 8, **caractérisé en ce qu'**il est scellé.
